Europäisches Patentamt

European Patent Office

Office européen des brevets

(19)

(11) Veröffentlichungsnummer: **0 077 019**
**B1**

(12) # EUROPÄISCHE PATENTSCHRIFT

(45) Veröffentlichungstag der Patentschrift:
11.09.85

(51) Int. Cl.⁴: **B 65 D 85/00**

(21) Anmeldenummer: 82109239.2

(22) Anmeldetag: 06.10.82

(54) Aufbewahrungskassette für plattenförmige Informationsträger hoher Speicherdichte.

(30) Priorität: 09.10.81 DE 3140146

(43) Veröffentlichungstag der Anmeldung:
20.04.83 Patentblatt 83/16

(45) Bekanntmachung des Hinweises auf die Patenterteilung:
11.09.85 Patentblatt 85/37

(84) Benannte Vertragsstaaten:
AT BE CH DE FR GB IT LI LU NL SE

(56) Entgegenhaltungen:
BE - A - 636 095
DE - A - 2 425 180
DE - A - 3 027 024
FR - A - 2 195 026
US - A - 793 415
US - A - 3 107 783
US - A - 3 583 729

(73) Patentinhaber: POLYGRAM GmbH, Harvestehuder
Weg 1-4, D-2000 Hamburg 13 (DE)

(72) Erfinder: Grobecker, Hermann, Scheelenkamp 6,
D-3008 Garbsen 4 (DE)
Erfinder: Heuer, Werner, Steinstrasse 51, D-3160 Lehrte
(DE)
Erfinder: Küstner, Werner, Karoxbosteler-Weg 4A,
D-2105 Seevetal 1 (DE)
Erfinder: Nusselder, Frederik Bernard, Konigslaan 19,
NL-1405 GH Bussum (NL)
Erfinder: Tendeloo, Han, Dipl.-Ing., De Genestetlaan 3,
NL-3743 HK Baarn (NL)

(74) Vertreter: Mehl, Ernst, Dipl.-Ing., Postfach 22 01 76,
D-8000 München 22 (DE)

BUNDESDRUCKEREI BERLIN

**Beschreibung**

Die Erfindung bezieht sich auf eine Aufbewahrungskassette für einen plattenförmigen Informationsträger hoher Speicherdichte.

Für die Aufbewahrung von Schallplatten ist es üblich, eine Innentasche aus dünnem Papier oder Kunststoffolie vorzusehen, die in einer Außentasche aus einem eine Illustration aufweisenden bedruckten Karton steckt. Für plattenförmige Informationsträger hoher Speicherdichte, wie sie beispielsweise optisch auslesbare Videoplatten oder digitale Schallplatten darstellen, reicht eine solche Innentaschen-Außentaschen-Verpackung nicht aus, da das einwandfreie Abspielen solcher Platten nur innerhalb sehr enger Verformungstoleranzen möglich ist. Mit anderen Worten muß bei der Aufbewahrung bzw. Lagerung solcher Platten hier sorgfältig darauf geachtet werden, daß keine Verbiegungen bzw. Verformungen auftreten können.

Der Erfindung liegt die Aufgabe zugrunde, für plattenförmige Informationsträger hoher Speicherdichte eine Aufbewahrungskassette anzugeben, die die geschilderten Lagerbedingungen erfüllt, sich leicht handhaben läßt und darüber hinaus einen geringen fertigungstechnischen Aufwand erfordert.

Ausgehend von einer beispielsweise durch die DE-OS 2 302 932 bekannten Ausführungsform eines Aufbewahrungsbehälters für Tonband-Kompaktkassetten, bestehend aus einem Bodenteil und einem an der Rückseite des Bodenteils drehbar befestigten Deckelteil, bei dem das Bodenteil außer einem Boden und einer Vorderwand zwei Seitenwände aufweist, die sich nach rückwärts über den Boden hinaus erstrecken und mit ihren freien Enden eine gabelförmige drehbare Aufhängung für das im Bereich dieser Aufhängung zu einer Deckelinnentasche gestaltete Deckelteil bilden und bei dem im zusammengeklappten Zustand vom Boden- und Deckelteil das Bodenteil durch die Deckelinnentasche zu einem in sich geschlossenen Bodenkasten mit in sich fluchtender Bodenfläche vervollständigt ist, wird diese Aufgabe für die Aufbewahrung von plattenförmigen Informationsträgern hoher Speicherdichte, insbesondere Digitalschallplatten, gemäß der Erfindung dadurch gelöst, daß die Seitenwände der Deckelinnentasche sich über die Deckelinnentasche hinaus praktisch über die gesamte Länge des Deckelteils erstrecken und daß ein an die Deckelinnentasche mit ihren verlängerten Seitenwänden in seinen Abmessungen angepaßter eigentlicher Plattenbehälter vorgesehen ist.

Der Erfindung liegt die Erkenntnis zugrunde, daß sich eine Kassettenausführungsform, wie sie für die Aufbewahrung von Kompaktkassetten üblich ist, in hervorragender Weise auch für die Aufbewahrung von plattenförmigen Informationsträgern hoher Speicherdichte dann eignet, wenn durch Verlängerung der Seitenwände der Deckelinnentasche über die gesamte Deckellänge des Deckelteils hinweg einerseits dessen Steifigkeit erhöht und andererseits für eine ausreichende Führung und Abstützung eines speziellen an die Deckelinnentaschenabmessungen angepaßten Plattenbehälters Sorge getragen wird.

Bei einer bevorzugten Ausführungsform ist der Plattenbehälter eine Palette mit die Platte in ihrer Lage fixierender Tiefen- bzw. Höhenprägung und ein die Palette umgebender Einband bzw. eine die Palettenoberseite abdeckende Textbeilage. Gegebenenfalls kann die Palette zusätzlich einen Deckel aufweisen.

Weitere vorteilhafte Ausgestaltungen der Erfindung sind in den Ansprüchen 4 bis 12 angegeben.

Anhand von in der Zeichnung dargestellten Ausführungsbeispielen soll die Erfindung im folgenden noch näher erläutert werden. In der Zeichnung bedeutet

Fig. 1 eine Aufbewahrungskassette mit Plattenbehälter in perspektivischer Darstellung,

Fig. 2 einen Teilausschnitt der Rückseite des Deckelteils nach Fig. 1 in perspektivischer Darstellung,

Fig. 3 eine weitere Ausführungs eines Plattenbehälters,

Fig. 4 eine Variante des Plattenbehälters nach Fig. 3,

Fig. 5 eine weitere Ausführungsform für einen mit einer Palette gestalteten Plattenbehälter,

Fig. 6 und 7 Schnittdarstellungen stapelbarer Paletten der Plattenbehälter nach Fig. 3, 4 und 5,

Fig. 8 eine weitere Schnittdarstellung einer Palette nach Fig. 3, 4 und 5.

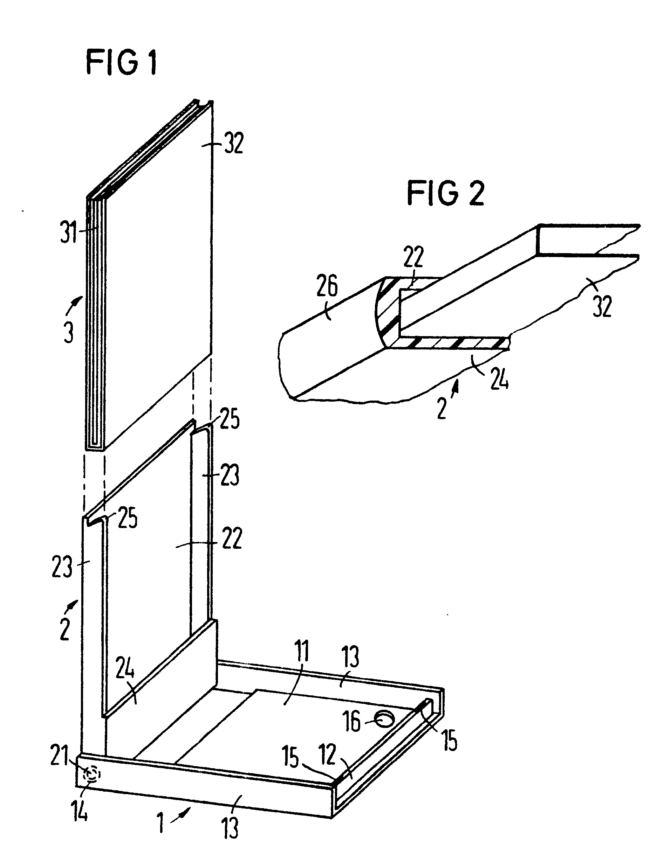

Die Aufbewahrungskassette nach Fig. 1 besteht aus dem Bodenteil 1, dem Deckelteil 2 und dem Plattenbehälter 3. Das Bodenteil 1 weist neben dem Boden 11 und der Vorderwand 12 zwei Seitenwände 13 auf, die sich nach rückwärts über den Boden 11 hinaus erstrecken und mit ihren freien Ende eine gabelförmige, drehbare Aufhängung für das Deckelteil 2 bilden. Hierzu weisen die freien Enden der Seitenwände 13 auf ihren Innenseiten Vertiefungen 14 auf, in die entsprechend gestaltete nockenförmige Erhöhungen des Deckelteils 2 eingreifen.

Das Deckelteil 2 besteht aus dem eigentlichen Deckel 22, den sich über die Gesamtlänge zu beiden Seiten erstreckenden Seitenwänden und dem im Bereich der Aufhängung vorgesehenen Deckelinnenwandungsteil 24, das zusammen mit den Seitenwänden 23 und einer nicht sichtbaren Rückwand eine Deckelinnentasche bildet. Wie aus der Zeichnung erkennbar, ergänzt im ineinander geklappten Zustand von Bodenteil 1 und Deckelteil 2 das Deckelinnenwandungsteil 24 mit Deckelrückwand das Bodenteil zu einem in sich geschlossenen Bodenkasten mit in sich fluchtender Bodenfläche.

Der Plattenbehälter 3 in Fig. 1 weist in seiner einfachsten Ausführungsform bei ausreichender Eigensteifigkeit eine die Platte aufnehmende Innenhülle 31 und einen die Innenhülle umgebenden Einband 32 auf, der im allgemeinen Fall mit Informationen bedruckt ist. Der Einband 32 kann aus einem bedruckten gefalteten Karton, einem buchartigen bedruckten Einband oder aber aus einem gefalteten Textheft bestehen. Der Plattenbehälter 3 ist in seinen Abmessungen sorgfältig auf die Abmessungen der Innentasche des Deckelteils 2 abgestimmt.

Wie Fig. 1 ferner erkennen läßt, sind die freien Enden 25 der Seitenteile 23 des Deckelteils 2 nockenartig gestaltet. Diesen Nocken sind auf der Innenseite der Vorderwand 12 des Bodenteils 1 Ausnehmungen 15 zugeordnet, in die die nockenartig gestalteten Enden 25 im ineinander geklappten Zustand von Boden- und Deckelteil unter Ausnutzung elastischer Materialverformung einrasten. Weiterhin weist der Boden 11 in Nähe der Vorderwand 12 eine Ausnehmung 16 auf, in die ein Verriegelungselement eingreifen kann. Gegebenenfalls kann eine solche Ausnehmung auch fluchtend mit der Ausnehmung 16 im ineinander geklappten Zustand von Boden- und Deckelteil im Plattenbehälter und im Deckelteil sein. Auf diese Weise ist es möglich, bei Repräsentationszwecken in Ausstellungsräumen mit Hilfe eines geeigneten durch die Ausnehmungen hindurchgeführten Sicherungselementes eine diebstahlsichere Befestigung der Aufbewahrungskassette vorzunehmen.

Zweckmäßigerweise bestehen das Bodenteil 1 und das Deckelteil 2 aus einem transparenten Kunststoff, so daß die Information auf dem bedruckten Einband 32 des Plattenbehälters 3 sowohl auf der Vorder- und der Rückseite als auch am Rücken im geschlossenen Zustand der Aufbewahrungskassette lesbar ist. Bei dem in Fig. 2 dargestellten Rücken des Deckelteils 2 ist die den Boden der Deckelinnentasche bildende Rückwand 26 als Zylinderlinse ausgebildet, die es ermöglicht, auch Kleingedrucktes ausreichend vergrößert lesen zu können.

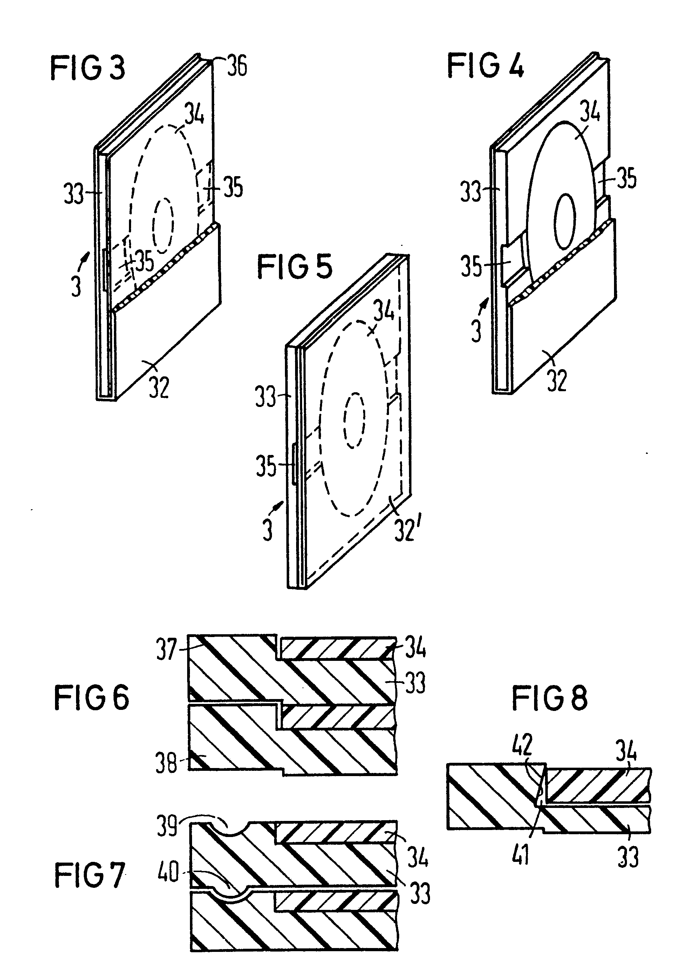

Fig. 3, 4 und 5 zeigen weitere vorteilhafte Ausgestaltungen des Plattenbehälters 3. Anstelle der Innenhülle 31 ist bei allen drei Ausführungsformen eine Palette 33 vorgesehen, die der aufzunehmenden Platte 34 angepaßte Ausformungen aufweist und beispielsweise aus Polyäthylenschaum oder einem kunststoffüberzogenen geprägtem Karton bestehen kann. Weiterhin weist die Palette 33 bei allen drei Ausführungsformen im Außenrandbereich der Platte 34 Griffvertiefungen 35 zum leichten Abheben der Platte auf. Im Unterschied zur Ausführungsform nach Fig. 4 ist bei der Ausführungsform nach Fig. 3 die Palette zusätzlich mit einem Deckel 36 versehen. Im Unterschied zu den Ausführungsformen nach den Fig. 3 und 4, bei denen die Palette von einem Einband 32 umhüllt ist, ist bei der Ausführungsform nach Fig. 5 die Palettenoberseite mit einer Textbeilage 32' abgedeckt, die hierbei in ihren Abmessungen an die Palettenabmessungen angepaßt ist und gemeinsam mit der Palette in die Deckelinnentasche des Deckelteils 2 nach Fig. 1 eingeschoben wird.

Die bei den Behälterausführungen nach den Fig. 3, 4 und 5 verwendeten Paletten 33 eignen sich in besonderer Weise auch für den Plattentransport im Zuge der Plattenherstellung. In diesem Zusammenhang ist es sinnvoll, die Paletten an Oberfläche und Boden mit zusammenfügbaren negativen und positiven Profilierungen zu versehen, die ein Verrutschen im Stapel verhindern. Fig. 6 und 7 zeigen hierfür zwei Ausführungsbeispiele. Bei der Ausführung nach Fig. 6 ist an der Oberseite eine Randerhöhung 37 und an der Unterseite ein abgesetzter Rand 38 vorgesehen. Bei der Ausführungsform nach Fig. 7 weist die Palette 33 am Rand an der Oberseite eine nutartige Vertiefung 39 und an der Unterseite eine der nutartigen Vertiefung 39 entsprechende stegartige Erhöhung 40 auf.

Fig. 8 zeigt schließlich eine Variante der Palette 33, bei der die Ausnehmung 41 für die Aufnahme der Platte 34 einen elastischen Schrägrand aufweist, durch den die Platte 34 in der Ausnehmung 41 zusätzlich gehalten ist.

**Patentansprüche**

1. Aufbewahrungskassette, bestehend aus einem Boden (1) und einem an der Rückseite des Bodenteils drehbar befestigten Deckelteil (2), bei dem das Bodenteil außer einem Boden (11) und einer Vorderwand (12) zwei Seitenwände (13) aufweist, die sich nach rückwärts über den Boden hinaus erstrecken und mit ihren freien Enden eine gabelförmige drehbare Aufhängung für das im Bereich dieser Aufhängung zu einer Deckelinnentasche (22, 23, 24, 26) gestaltete Deckelteil bilden und bei dem im zusammengeklappten Zustand von Boden- und Deckelteil das Bodenteil durch die Deckelinnentasche zu einem in sich geschlossenen Bodenkasten mit in sich fluchtender Bodenfläche vervollständigt ist, dadurch gekennzeichnet, daß für die Aufbewahrung von plattenförmigen Informationsträgern (34) hoher Speicherdichte, insbesondere Digitalschallplatten, die Seitenwände (23) der Deckelinnentaschen (22, 23, 24, 26) sich über die Deckelinnentasche hinaus praktisch über die gesamte Länge des Deckelteils (2) erstrecken und daß ein an die Deckelinnentasche mit ihren verlängerten Seitenwänden in seinen Abmessungen angepaßter eigentlicher Plattenbehälter (3) vorgesehen ist.

2. Aufbewahrungskassette nach Anspruch 1, dadurch gekennzeichnet, daß der Plattenbehälter (3) eine Palette (33) mit der Platte (34) in ihrer Lage fixierender Tiefen- bzw. Höhenprägung und ein die Palette umgebender Einband (32) ist.

3. Aufbewahrungskassette nach Anspruch 1, dadurch gekennzeichnet, daß der Plattenbehälter (3) eine Palette (33) mit die Platte (34) in ihrer Lage fixierender Tiefen- bzw. Höhenprägung und einer die Palette an der Oberseite abdeckende Textbeilage (32') ist.

4. Aufbewahrungskassette nach Anspruch 1 oder 2, dadurch gekennzeichnet, daß die Palette (33) einen Deckel (36) aufweist.

5. Aufbewahrungskassette nach einem der vorhergehenden Ansprüche, dadurch gekennzeichnet, daß die Palette (33) im Bereich des äußeren Randes der sie aufnehmenden Platte (34) dem leichten Abheben der Platte von der Palette dienende Griffvertiefungen (35) aufweist.

6. Aufbewahrungskassette nach einem der vorhergehenden Ansprüche, dadurch gekennzeichnet, daß die Palette (33) aus Polyäthylenschaum oder folienkaschiertem Karton besteht.

7. Aufbewahrungskassette nach einem der vorhergehenden Ansprüche, dadurch gekennzeichnet, daß die Paletten (33) durch spezielle einander zugeordnete Erhöhungen (37, 40) und Vertiefungen (38, 39) stapelbar gestaltet sind.

8. Aufbewahrungskassette nach Anspruch 1, dadurch gekennzeichnet, daß der Plattenbehälter (3) bei ausreichender Eigensteifigkeit aus einer Innenhülle (31) mit einem die Innenhülle umgebenden mit Information bedruckten Einband (32) besteht.

9. Aufbewahrungskassette nach einem der vorhergehenden Ansprüche, dadurch gekennzeichnet, daß die verlängerten Seitenwände (23) der Deckelinnentasche (22, 23, 24, 26) an ihren freien Enden (25) nockenförmig ausgebildet sind und im ineinander geklappten Zustand von Boden- und Deckelteil (1, 2) in zugehörige Ausnehmungen (15) an der Innenseite der Vorderwand (12) des Bodenteils unter Ausnutzung elastischer Materialverformung einrasten.

10. Aufbewahrungskassette nach einem der vorhergehenden Ansprüche, dadurch gekennzeichnet, daß Boden- und Deckelteil (1, 2) aus transparentem Kunststoff bestehen.

11. Aufbewahrungskassette nach einem der vorhergehenden Ansprüche, dadurch gekennzeichnet, daß die den Boden der Deckelinnentasche (22, 23, 24, 26) bildende Deckelrückwand (26) eine aus transparentem Kunststoff gestaltete Zylinderlinse ist.

12. Aufbewahrungskassette nach einem der vorhergehenden Ansprüche, dadurch gekennzeichnet, daß im Boden- und/oder im Deckelteil (1, 2) eine Ausnehmung für den Eingriff eines Verriegelungs- bzw. Sicherungselements vorgesehen ist.

**Claims**

1. A storage cassette consisting of a base part (1) and a cover part (2) which is rotatably secured to the rear of the base part, in which, in addition to a floor (11) and a front wall (12) the base part has two side walls (13) which extend beyond the floor towards the rear and at their free ends form a fork-shaped rotatory suspension for the cover part which, in the region of the suspension, is designed in the form of an inner cover pocket (22, 23, 24, 26), and in which, in the state in which the base and cover parts are folded together, the base part is completed by the inner cover pocket to form a closed base case having a self-aligned base surface, characterised in that for the storage of high-desity disc-shaped data carriers (34), in particular digital records, the side walls (23) of the inner cover pockets (22, 23, 24, 26) extend in practice beyond the inner cover pocket over the entire length of the cover part (2), and that an actual disc container (3) is provided the dimensions of which are adjusted to the inner cover pocket with its extended side walls.

2. A storage casette as claimed in claim 1, characterised in that the disc container (3) is a plate (33) with recessed or raised stampings, which hold the disc (34) in position, and a cover (32) which surrounds the plate.

3. A storage cassette as claimed in claim 1, characterised in that the disc container (3) is a plate (33) with recessed or raised stampings which hold the disc (34) in position, and a text supplement (32′) which covers the plate on the upper side.

4. A storage cassette as claimed in claim 1 or claim 2, characterised in that the plate (33) has a lid (36).

5. A storage cassette as claimed in one of the preceding claims, characterised in that the plate (33) in the region of the outer edge of the disc (34) housed therein, has gripping recesses (35) which serve for the easy lifting of the disc from the plate.

6. A storage cassette as claimed in one of the preceding claims, characterised in that the plate (33) is made of polyethylene foam or foil-covered cardboard.

7. A storage cassette as claimed in one of the preceding claims, characterised in that the plates (33) can be stacked by means of specific mutually assigned elevations (37, 40) and recesses (38, 39).

8. A storage cassette as claimed in claim 1, characterised in that the disc container (3), having adequate inherent rigidity, consists of an inner casing (31) with a cover (32) which surrounds the inner casing and on which information is printed.

9. A storage cassette as claimed in one of the preceding claims, characterised in that the extended side walls (23) of the inner cover pocket, (22, 23, 24, 26) are cam-shaped at their free ends and when the base and cover parts (1, 2) are folded into one another, the sode walls engage into assigned recesses (15) on the inside of the front wall (12) of the base part, making use of elastic deformation of the material.

10. A storage cassette as claimed in one of the preceding claims, characterised in that the base and cover parts (1, 2) are made of transparent plastic.

11. A storage cassette as claimed in one of the preceding claims, characterised in that the rear wall (26) of the cover which forms the bottom of the inner cover pocket (22, 23, 24, 26) is a cylindrical lens made of transparent plastics material.

12. A storage cassette as claimed in one of the preceding claims, characterised in that in the base part and/or the cover part (1, 2), there is arranged a recess for the engagement of a locking or security element.

## Revendications

1. Cassette constituée d'une partie inférieure (1) formant fond et d'une partie supérieure (2) formant couvercle et fixée rotative sur le côté arrière de la partie inférieure, laquelle comporte, outre le fond (11) et une paroi avant (12), deux parois latérales (13) qui s'étendent vers l'arrière au-delà du fond et constituent par leurs extrémités libres un support en forme de fourche pour le montage rotatif de la partie supérieure, conformée dans cette zone en une poche intérieure du couvercle (22, 23, 24, 26), la partie inférieure étant complétée par la poche intérieure du couvercle pour former un boîtier à fond fermé dont la surface de fond est alignée lorsque les parties inférieure et supérieure sont rabattues l'une contre l'autre, caractérisée en ce que, pour la conservation de supports d'informations (34) en forme de disque à haute densité de mémorisation, en particulier de disques à enregistrements sonores numériques, les parois latérales (23) de la poche intérieure du couvercle (22, 23, 24, 26) s'étendent au-delà de la poche intérieure sur pratiquement toute la longueur de la partie supérieure (2) et en ce qu'elle comporte en outre un contenant de disque ou porte-disque (3) dont les dimensions sont adaptées à la poche intérieure du couvercle avec ses parois latérales prolongées.

2. Cassette selon la revendication 1, caractérisée en ce que le porte-disque (3) est une palette (33) avec une déformation en creux ou en relief pour fixer le disque (34) en place et une couverture (32) entourant la palette.

3. Cassette selon la revendication 1, caractérisée en ce que le porte-disque (3) est une palette (33) avec une déformation en creux ou en relief pour fixer le disque (34) en place et une feuille à texte (32') rajoutée et recouvrant le dessus de la palette.

4. Cassette selon la revendication 2 ou 3, caractérisée en ce que le palette (33) présente un couvercle (36).

5. Cassette selon une des revendications précédentes, caractérisée en ce que la palette (33) présente, dans la région du bord extérieur du disque (34) qu'elle reçoit, des creux de prise (35) facilitant le soulèvement du disque de la palette.

6. Cassette selon une des revendications précédentes, caractérisée en ce que la palette (33) est en mousse de polyéthylène ou en carton revêtu de plastique.

7. Cassette selon une des revendications précdentes, caractérisée en ce que les palettes (33) sont pourvues de renflemments (37, 40) et de creux (38, 39) particuliers complémentaires qui rendent les palettes empilables.

8. Cassette selon la revendication 1, caractérisée en ce que le porte-disque (3) est constitué, de manière qu'il possède une regidité propre suffisante, d'une enveloppe intérieure (31) et d'une couverture (32) portant des informations imprimées et entourant l'enveloppe intérieure.

9. Cassette selon une des revendications précédentes, caractérisée en ce que les parois latérales prolongées (23) de la poche intérieure du couvercle (22, 23, 24, 26) sont pourvues d'extrémités libres (25) saillantes qui, lorsque les parties inférieure (1) et supérieure (2) sont rabattues l'une contre l'autre, s'engagent et son retenues par crantage, avec utilisation d'une déformation élastiques du matériau, dans des encoches (15) correspondantes sur le côté intérieur de la paroi avant (12) de la partie inférieure.

10. Cassette selon une des revendications prércédentes, caractérisée en ce que les parties inférieure (1) et supérieure (2) sont en plastique transparent.

11. Cassette selon une des revendications précédentes, caractérisée en ce que la paroi arrière (26) du couvercle, formant le fond de la poche intérieure du couvercle (22, 23, 24, 26), est une lentille cylindrique en plastique transparent.

12. Cassette selon une des revendications précédentes, caractérisée en ce qu'un trou pour le passage d'un élément de verrouillage ou de sûreté est prévu dans la partie inférieure (1) et/ou dans la partie supérieure (2).

# FIG 1

# FIG 2

FIG 3

36

34

33

35

35

3

32

FIG 5

34

33

35

3

32'

FIG 4

34

33

35

35

3

32

FIG 6

37

34

33

38

FIG 7

39

40

34

33

FIG 8

42

34

41

33